# EUROPEAN PATENT SPECIFICATION

(11) **EP 2 764 759 B1**
(45) Date of publication and mention of the grant of the patent: **11.01.2017**
(21) Application number: 12772189.2
(22) Date of filing: 07.08.2012
(51) Int. Cl.: H05H 1/48, C02F 1/467

(54) **METHOD AND A DEVICE FOR PRODUCTION OF PLASMA**
VERFAHREN UND VORRICHTUNG ZUR HERSTELLUNG VON PLASMA
PROCÉDÉ ET DISPOSITIF DE GÉNÉRATION DE PLASMA

(30) Priority: 03.10.2011 BG 11104411
(43) Date of publication of application: 13.08.2014
(73) Proprietor: Borisov, Borislav, Stefanov, Sofia 1632 (BG); Trenchev, Konstantin, Dimitrov, Sofia 1408 (BG)
(72) Inventor: Borisov, Borislav, Stefanov, Sofia 1632 (BG); Trenchev, Konstantin, Dimitrov, Sofia 1408 (BG)
(74) Representative: Georgieva, Lilia Tzvetkova
(86) International application number: PCT/BG2012/000020
(87) International publication number: WO 2013/049902

(56) References cited:
- WO-A1-95/05263
- WO-A1-2007/105885
- WO-A2-2010/144923
- CN-A- 101 254 960

## Description

### FIELD OF THE INVENTION

The present invention relates to a method for production of plasma and a mixture of the gases hydrogen and oxygen known as Broun's gas which burns in plasma, and a device for implementation of the said method. They may be used in the heat engineering for heating; for harmful waste treatment, for gasification of hydrogen-containing hard materials, for melting and soldering metal and non-metal materials.

### BACKGROUND OF THE INVENTION

Methods are known for production of plasma between two hard electrodes, most often made of graphite, connected to a direct current voltage source and with an opposite polarity. Plasma is produced after initiating a plasma formation process by initial touching the electrodes followed by their mechanical moving apart to a definite critical distance, or by heating one of the electrodes so as to initiate an electron emission under the effect of the high temperature.

A process called electrolysis is known, during which a direct current voltage is applied to electrodes with an opposite polarity which are submerged in a water solution of an electrolyte. Gas, resp. oxygen and hydrogen, start to release on the positive electrode (cathode) and the negative electrode (anode). They may be used either separately, or may be mixed in a definite manner into a gas mixture known as Broun's gas.

A process is known, during which water is heated to a high temperature so as to initiate a reversible reaction where the water molecule is decomposed to its constituents - oxygen and hydrogen. This process starts at a temperature above 1000 °C, and above 3000° C, substantially all water molecules are already decomposed to their constituents. When the temperature lowers, hydrogen and oxygen again bond to each other to form a water molecule, while a big amount of thermal power is released during this synthesis.

### SUMMERY OF THE INVENTION

The purpose of the invention is to provide a method for production of plasma which is more efficient, cheaper, environmentally friendly and safe, as well as a device for easy and efficient implementation of the said method.

The problem is solved using the method proposed for production of plasma and the devise for implementation of the said method.

According to the present invention at least one pair of water streams flowing under pressure opposite to each other through a pair of pipes opened at one end and said streams flow-out freely through said open ends arranged in a distance from each other, so as between the two water streams an area is formed. An electrode is located in each one of said pipes and completely is submerged within the water stream, and high voltage of more than 1000 V is supplied to the both electrodes connected to both opposite poles of a direct current electricity source of high voltage for generation of plasma in the area between the both water streams, flowing-out freely from the pipes.

According to the present invention the device for production of plasma comprises at least one pair of electrodes connected to the opposite poles of a source of high voltage direct current, and each of the electrodes is accommodated inside a pipe made of a heat-resistant insulation material, and opened at one end, where the open ends of the both pipes (5) are arranged in a distance from each other. The pipes are supplied with water by means of flexible pipe connections from a distributor, into which the water is fed under pressure from a water tank by a water pump.

### BRIEF DESCRIPTION OF THE DRAWING

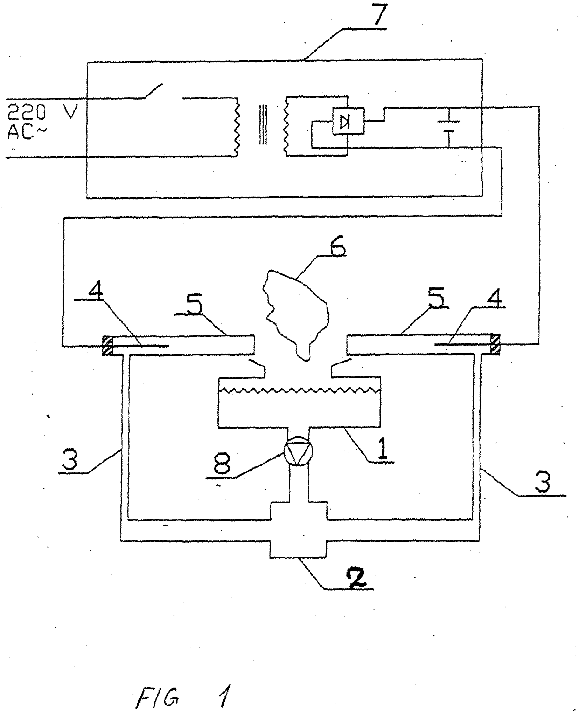

Fig 1 is a devise for implementation of the method according to the present invention.

### DETAILED DESCRIPTION OF THE INVENTION

According to the method proposed, two or more water streams are created by means of a distributor in which water under pressure enters from a circulation pump which draws the water from a water tank. These water streams, through connection joints, reach one or more pairs of pipes made of a heat-resistant material. Each of the pipes accommodates a metal electrode which is connected to a direct current high voltage source, while both electrodes are with an opposite polarity. When the voltage is applied, plasma is produced in the gap between the openings of said pair of pipes through which the water flows. The voltage is applied simultaneously to the electrodes, when they are only two, and when they are more than two, it can be supplied at various times to the different pairs of electrodes.

The voltage supplied to the electrodes exceeds 1000 V. In one particular embodiment of the invention, the direct current high voltage supplied is between 3000 V and 5000 V.

Plasma produced within the gap between the openings of each pair of pipes is with a temperature above 4000° C.

The amount of pressure of the water streams and the supply voltage of the source are determined depending of the size of the plasma area to be obtained.

The device proposed for plasma production comprises at least one pair of electrodes with an opposite polarity which are accommodated in pipes through which water flows and are connected to a high direct current voltage source. Water enters from a water tank, and by means of a circulation pump under a definite pressure goes to a distributor where it is divided into at least two or more even water streams which, through flexible connection, pass into the pipes of a heat-resistant insulation material. These pipes accommodate also the electrodes. The electric current passes from the electrodes into the water streams and charges them with opposite charges. Plasma is produced in the space between the water streams flowing out from the pipe ends, whereby gas bubbles start to release on the surfaces of the electrodes accommodated in the pipes at a definite distance from their outlet, resp. oxygen - at the positive electrode, and hydrogen - at the negative electrode. The gases are carried away by the water stream and, leaving the pipe end, they fall into the plasma where they burn in a common plasma-gas flame.

Particular embodiments of the invention are possible, wherein the pipes are made of a quartz glass or ceramics and may be arranged horizontally, one opposite the other, or at a definite angle in relation to each other.

The gap between the pipe openings through which the water streams flow may be various, while in one of the embodiments according to the invention, it exceeds 5 mm.

According to a particular embodiment of the invention the pipes and the electrodes accommodated therein are two, and according other embodiments, they may be "N", where N is an even number.

A part of the water of the water streams passing through the pipes is used for production of plasma, and another part which is not used, returns back to the water tank. Thus, a closed loop is created in which the water pumped out of the tank, passing through the circulation pump, divided by the distributor into two or more water streams used for production of plasma, is partially returned back into the tank which, on its part, should be topped-up as required.

The advantages of the method and the device proposed for plasma production consist in that they are environmentally friendly, do not release harmful emissions, and consume a small amount of power. The plasma obtained is with a temperature exceeding 4000° C, and available and cheap materials are used for their production.

With view to intensification of plasma formation, an electrolyte solution at a low concentration may be used, and with view to increasing the process energy yield, small amounts of water-soluble fuels or water-oil emulsions may be added.

In the particular embodiment shown in Fig. 1 of the plasma production device, water under pressure is fed from a water tank (1) using a circulation pump (8) into a distributor which outlets are connected by means of flexible connections (3) to a pair of pipes (5) made of a quartz glass, of ceramics or another heat-resistant insulation material. Each one of the pipes (5) accommodates one electrode (4) which is connected to a direct current high voltage source (7). One of the electrodes is with a positive charge (anode), and the other is with a negative charge (cathode).The pipes are open in their one end and the water entering them flows freely out through this said end, falling through a funnel-like collector again into the water tank. A clearance (gap) of at least 5 mm exists between both water streams which freely flow out through the open pipe ends, whereby in the clearance between them, after applying a direct current high voltage to the electrodes, a process of plasma (6) formation is initiated.

The clearance between the water streams may be varied within definite limits which influences the intensity of the plasma formation process. Both electrodes are completely submersed under the water passing through the pipes and do not reach the pipe free opening, while the water column between the electrode end and the pipe open end is 20 mm in this particular embodiment, by may vary within definite critical limits. Both pipes, resp. their openings, may be arranged horizontally, one opposite the other, or at a definite angle which may vary according to our desire to make the plasma formation process either less, or more intensive.

Small amounts of hydrogen and oxygen gases start to be added to the plasma torch with a temperature exceeding 4000° C obtained in the gap, which gases start to be discharged on the electrode surfaces, resp. hydrogen - on the anode, and oxygen - on the cathode. They are carried in the form of small bubbles by the water passing and, going out through the free pipe openings, they fall into the plasma torch, where hydrogen burns-up, and oxygen intensifies the process of burning. Due to the fact that the plasma torch contacts directly with the water streams and is formed between them, an intensive process of evaporation from the water surface starts. The water molecules evaporated, falling into the plasma area and due to the extremely high temperature of the medium, decompose to hydrogen and oxygen which move in height, and when the ambient temperature starts to lower, a reversible reaction of a water molecule synthesis is initiated. Said reaction gets more intensive with increase of the distance to the active plasma formation area; and a big amount of energy is also released during said synthesis.

In another particular embodiment of the invention, the pairs of water streams, resp. the electrodes accommodated therein, are more than one, the direct current high voltage may be applied at various times to the electrodes, and the order of switching on the different pairs of electrodes depends on the desired process. 1, 2, 3, 4 up to N pairs of electrodes may be comprised, which, on its turn, leads to creation of 1, 2, 3, 4 up to N separate plasma formation processes.

### INDUSTRIAL APPLICABILITY

The invention may be used for production of DHW /domestic hot water/, of steam to be used for production of electric energy, as an external heat source for a Stirling engine, for combustion of waste /including medical and radioactive/, for gasification of hydrogen-containing hard materials, for melting and welding metal and non-metal materials.

## Claims

1. A method for production of plasma, wherein at least one pair of water streams flows under pressure opposite to each other through a pair of pipes (5) opened at one end and said streams flow-out freely through said open ends arranged at a distance from each other, so that between the two water streams an area is formed, **characterized in that** an electrode (4) is located in each one of said pipes (5) and is completely submerged within the water stream, and high voltage of more than 1000 V is supplied to both of said electrodes (4) connected to both opposite poles of a direct current electricity source (7) of high voltage for generation of plasma (6) in the area between both of said water streams, flowing-out freely from the pipes (5).

2. A method for production of plasma according to claim 1, **characterized in that** the high voltage direct current is supplied simultaneously to all pairs of electrodes (4).

3. A method for production of plasma according to claim 1, **characterized in that** the high voltage direct current is supplied at various times to the pairs of electrodes (4).

4. A device for production of plasma, the device comprising at least one pair of electrodes connected to the opposite poles of a source of high voltage direct current, **characterized in that** each of the electrodes (4) is accommodated inside a pipe (5) made of heat-resistant insulation material, and opened at one end, where the open ends of the both pipes (5) are arranged at a distance from each other and the pipes are supplied with water by means of flexible pipe connections (3) from a distributor (2), into which the water is fed under pressure by a water pump (8) from a water tank (1).

5. A device for production of plasma according to claim 4, **characterized in that** the heat-resistant insulation material of which the pipes are produced is quartz glass or ceramics.

6. A device for production of plasma according to claims 4 and 5, **characterized in that** the open pipe ends are arranged horizontally or at an angle, opposite each other.

7. A device for production of plasma according to claims 4 - 6, **characterized in that** the clearance between open ends of the pipes (5) exceeds 5 mm.

8. A device for production of plasma according to claims 4 - 7, **characterized in that** the number of the pipes (5) and the electrodes (4) accommodated in them are from two up to "N", where N is an even number.

## Patentansprüche

1. Verfahren zur Herstellung von Plasma, wobei mindestens ein Paar Wasserströme sich durch ein Paar von an einem Ende offenen Rohrleitungen (5) unter Druck gegeneinander bewegen und wobei die Ströme durch die voneinander beabstandeten offenen Enden frei fließen, so daß zwischen beiden Wasserströmen eine Zone entsteht, **dadurch gekennzeichnet, daß** in den Rohren (5) jeweils eine vollständig im Wasserstrom getauchte Elektrode angeordnet ist, und daß zu den zwei an den Gegenpolen einer Hochspannungs-Gleichstromquelle (7) angeschlossenen Elektroden jeweils von über 1.000 V zugegeführt wird, und zwar zu Herstellung von Plasma (6) in der Zone zwischen beiden vorgenannten und aus den Rohren (5) frei fließenden Wasserströmen.

2. Verfahren zur Herstellung von Plasma nach Anspruch 1, **dadurch gekennzeichnet, daß** der Hochspannungs-Gleichstrom allen Elekroderipaaren (4) zeitgleich zugeleitet wird.

3. Verfahren zur Herstellung von Plasma nach Anspruch 1, **dadurch gekennzeichnet, daß** der Hochspannungs-Gleichstrom zu den Elekrodenpaaren (4) nicht zeitgleich zugeleitet wird.

4. Vorrichtung zur Herstellung von Plasma, wobei die Vorrichtung mindestens ein Paar von Elektroden umfasst, die jeweils an den beiden Gegenpolen einer Hochspannungs-Gleichstromquelle angeschlossenen sind, **dadurch gekennzeichnet, daß** jede Elektrode (4) jeweils in einem Rohr (5) aus wärmebeständigem Isolierstoff und mit einem offenen Ende plaziert ist, wobei die offenen Enden der beiden Rohre (5) voneinander beabstandeten sind und die Rohre über Schlauchleitungen (3) von einem Wegeventil (2) mit Wasser versorgt werden, in welches Ventil unter Druck Wasser aus einem Wasserspeicher (1) über eine Umwälzpumpe zugeleitet wird (8).

5. Vorrichtung zur Herstellung von Plasma nach Anspruch 4, **dadurch gekennzeichnet, daß** der wärmebeständige Isolierstoff, aus dem die Rohre gefertigt sind, Quarzglas oder Keramik ist.

6. Vorrichtung zur Herstellung von Plasma nach Ansprüchen 4 und 5, **dadurch gekennzeichnet, daß** die offenen Rohrenden horizontal oder unter Winkel gegeneinander angeordnet sind.

7. Vorrichtung zur Herstellung von Plasma nach Ansprüchen 4 - 6, **dadurch gekennzeichnet, daß** der Abstand zwischen den offenen Rohrenden (5) bei über 5 mm liegt.

8. Vorrichtung zur Herstellung von Plasma nach Ansprüchen 4 - 7, **dadurch gekennzeichnet, daß** die Anzahl der Rohre (5) und der darin angeordneten Elektroden (4) bei zwei bis "N" -Geradzahlen liegt.

## Revendications

1. Procédé de génération de plasma dans lequel au moins une paire de flux d'eau coulent sous pression en sens contraire, l'un contre l'autre, en passant par une paire de tubes (5), ouverts à l'une des extrémités de chacun d'eux; les flux d'eau mentionnés s'écoulent librement par les extrémités ouvertes mentionnées ci-dessus, disposées à distance l'une de l'autre, d'une telle façon qu'entre les deux flux d'eau il se forme une zone, **caractérisée en ce que** dans chacun des tubes (5) est disposée une électrode (4) entièrement trempée dans le flux d'eau, et les deux électrodes sont alimentées d'une haute tension supérieure à 1000 V et sont joints aux deux pôles opposés d'une source (7) de courant continu à haute tension, pour générer le plasma (6) dans la zone entre les deux flux d'eau mentionnés ci-dessus, s'écoulant librement par les tubes (5).

2. Procédé de génération de plasma selon la revendication 1, **caractérisé en ce que** toutes les paires d'électrodes (4) sont alimentées par un courant continu à haute tension.

3. Procédé de génération de plasma selon la revendication 1, **caractérisé en ce que** toutes les paires d'électrodes (4) sont alimentées par un courant continu à haute tension à des moments différents.

4. Dispositif de génération de plasma, comprenant au moins une paire d'électrodes, jointes aux deux pôles opposés de la source du courant continu à haute tension, **caractérisé en ce que** chacune des électrodes (4) est disposée dans un tube (5) en matériau isolant thermique, dont l'une des deux extrémités est ouverte; les extrémités ouvertes des deux tuyaux (5) sont disposés à distance l'une de l'autre et les tubes sont alimentés en eau à l'aide de tuyaux flexibles (3), par un distributeur (2), alimenté en eau sous pression à partir d'un réservoir d'eau (1) par l'intermédiaire d'une pompe de circulation (8).

5. Dispositif de génération de plasma selon la revendication 4, **caractérisé en ce que** le matériau isolant thermique, dont sont fabriqués les tubes, est du verre de quartz ou de la céramique.

6. Dispositif de génération de plasma selon les revendications 4 et 5, **caractérisé en ce que** les extrémités ouvertes des tubes sont disposées horizontalement ou sous angle, l'une contre l'autre.

7. Dispositif de génération de plasma selon les revendications 4 - 6, **caractérisé en ce que** la distance entre les extrémités ouvertes des tubes (5) est supérieure à 5 mm.

8. Dispositif de génération de plasma selon les revendications 4 - 7, **caractérisé en ce que** le nombre des tubes (5) et des électrodes (4) disposées à l'intérieur varie entre deux et « N » nombres pairs.
